# EUROPÄISCHE PATENTANMELDUNG

(11) **EP 4 190 627 A1**
(43) Veröffentlichungstag der Anmeldung: **07.06.2023**
(21) Anmeldenummer: 22209562.2
(22) Anmeldetag: 25.11.2022
(51) Int. Cl.: B60L 53/30, B60L 3/00, B60L 3/04, B60L 53/68

(54) **KONFIGURIERBARE SYSTEMLADEVORRICHTUNG**

(30) Priorität: 01.12.2021 DE 102021131686
(71) Anmelder: Compleo Charging Solutions AG, 44309 Dortmund (DE)
(72) Erfinder: Kachouh, Checrallah, 44227 Dortmund (DE)
(74) Vertreter: Wickord, Wiro

(57) **Zusammenfassung**

Die Erfindung betrifft eine Systemladevorrichtung für elektrisch betreibbare Fahrzeuge umfassend ein Anschlussmodul (10) mit einem Anschlussmodulgehäuse (11) und Anschlussmitteln für ein zu dem Anschlussmodul (10) geführtes externes Anschlusskabel (1), wobei das Anschlussmodulgehäuse (11) eine Anschlussmodulgehäusewandung vorsieht und die Anschlussmodulgehäusewandung einen Anschlussmodulgehäuseinnenraum (15) umschließt, umfassend ein an das Anschlussmodul (10) angebautes Lademodul (20) mit einem Lademodulgehäuse (21), wobei das Lademodulgehäuse (21) eine Lademodulgehäusewandung (26) vorsieht und die Lademodulgehäusewandung (26) einen Lademodulgehäuseinnenraum (25) umschließt, mit einem Steckelement (40), wobei das Steckelement (40) eingerichtet ist zum Übertragen einer Ladeleistung und zum Austausch von Ladevorgangssignalen mit einem elektrisch betreibbaren Fahrzeug, und mit einem in dem Lademodulgehäuseinnenraum (25) vorgesehenen Steuergerät, welches eingerichtet ist zum Durchführen des Ladevorgangs, und umfassend eine Ladeleistungsleitung, welche von den Anschlussmitteln des Anschlussmoduls (10) zu dem Steckelement (40) geführt ist, wobei das Anschlussmodul (10) einen Anschlussadapter (12) und das Lademodul (20) einen korrespondierend gestalteten Lademoduladapter (22) vorsieht zur elektrischen und mechanischen Kopplung von Anschlussmodul (10) und Lademodul (20) derart, dass über die miteinander verbundenen Adapter (12, 22) die Ladeleistung und/oder Betriebsdaten übertragbar sind, und wobei außen an dem Anschlussmodulgehäuse (11) und/oder außen an dem Lademodulgehäuse (21) eine abschnittsweise von der Anschlussmodulgehäusewandungsaußenseite und/oder der Lademodulgehäusewandungsaußenseite (28) begrenzte Montagenische (23) für ein Kommunikationsmodul (30) gebildet ist.

## Beschreibung

Die Erfindung betrifft eine Systemladevorrichtung für elektrisch betreibbare Fahrzeuge umfassend ein Anschlussmodul mit einem Anschlussmodulgehäuse und Anschlussmitteln für ein zu dem Anschlussmodul geführtes externes Anschlusskabel, wobei das Anschlussmodulgehäuse eine Anschlussmodulgehäusewandung mit einer Anschlussmodulgehäusewandungsinnenseite und einer Anschlussmodulgehäusewandungsaußenseite vorsieht und die Anschlussmodulgehäusewandung einen Anschlussmodulgehäuseinnenraum umschließt, dem die Anschlussmodulgehäusewandungsinnenseite zugewandt ist, umfassend ein an das Anschlussmodul angebautes Lademodul mit einem Lademodulgehäuse, wobei das Lademodulgehäuse eine Lademodulgehäusewandung mit einer Lademodulgehäusewandungsinnenseite und einer Lademodulgehäusewandungsaußenseite vorsieht und die Lademodulgehäusewandung einen Lademodulgehäuseinnenraum umschließt, dem die Lademodulgehäusewandungsinnenseite zugewandt ist, mit einem Steckelement, wobei das Steckelement eingerichtet ist zum Übertragen einer Ladeleistung und zum Austausch von Ladevorgangssignalen mit einem elektrisch betreibbaren Fahrzeug, und mit einem in dem Lademodulgehäuseinnenraum vorgesehenen Steuergerät, welches eingerichtet ist zum Durchführen des Ladevorgangs, und umfassend eine Ladeleistungsleitung, welche von den Anschlussmitteln des Anschlussmoduls zu dem Steckelement geführt ist, wobei das Anschlussmodul einen Anschlussadapter und das Lademodul einen korrespondierend gestalteten Lademoduladapter vorsieht zur elektrischen und mechanischen Kopplung von Anschlussmodul und Lademodul derart, dass über die miteinander verbundenen Adapter die Ladeleistung und/oder Betriebsdaten übertragbar sind.

Eine gattungsgemäße funktionskonfigurierbare Systemladevorrichtung ist aus der DE 10 2018 112 958 A1 bekannt. Die Systemladevorrichtung sieht ein Anschlussmodul mit einem mehrteiligen Anschlussmodulgehäuse sowie ein an das Anschlussmodulgehäuse anbaubares Lademodul mit einem mehrteiligen Lademodulgehäuse vor. Das Lademodulgehäuse ist so an das Anschlussmodulgehäuse angebaut, dass wenigstens einige, in dem Anschlussmodulgehäuse untergebrachte Funktionskomponenten der Systemladevorrichtung von dem Lademodulgehäuse überdeckt werden. Die gleichen Funktionskomponenten sind zugänglich, wenn das Lademodulgehäuse nicht an das Anschlussmodulgehäuse angebaut ist. Das optionale Kommunikationsmodul der Systemladevorrichtung ist - wenn es installiert ist - in einem Deckel des Lademodulgehäuses untergebracht. Es wird insofern werksseitig vor dem Verschließen des Lademodulgehäuses im Innenraum des Lademodulgehäuses installiert beziehungsweise kann abhängig von der Funktionskonfiguration der Systemladevorrichtung ausgespart werden. Eine Nachrüstung des Kommunikationsmoduls kann aufgrund der Anordnung desselben in dem Lademodulgehäuseinnenraum nicht in einfacher Weise erfolgen. Hierzu ist es notwendig, das Lademodul zu demontieren und das Lademodulgehäuse zu öffnen.

Aufgabe der vorliegenden Erfindung ist es, eine gattungsgemäße Systemladevorrichtung in Richtung einer erweiterten Modularität, verbesserten Konfigurierbarkeit und einfachen Nachrüstbarkeit weiterzubilden.

Zur Lösung der Aufgabe ist die Erfindung in Verbindung mit dem Oberbegriff des Patentanspruchs 1 dadurch gekennzeichnet, dass außen an dem Anschlussmodulgehäuse und/oder außen an dem Lademodulgehäuse eine abschnittsweise von der Anschlussmodulgehäusewandungsaußenseite und/oder der Lademodulgehäusewandungsaußenseite begrenzte Montagenische für ein Kommunikationsmodul gebildet ist. Das Kommunikationsmodul ist für die drahtlose und/oder leitungsgebundene Übertragung von Austauschdaten an einen externen Serviceanbieter und/oder zurück eingerichtet.

Der besondere Vorteil der Erfindung besteht darin, dass das Kommunikationsmodul aufgrund seiner Positionierung außen an dem Lademodulgehäuse und/oder dem Anschlussmodulgehäuse besonders einfach installiert und insbesondere später einfach nachgerüstet werden kann. Zur Installation beziehungsweise Nachrüstung des Kommunikationsmoduls muss die Gehäusekomponente der Systemladevorrichtung, an der die Montagenische für das Kommunikationsmodul vorgesehen ist, das heißt das Anschlussmodulgehäuse und/oder das Lademodulgehäuse nicht geöffnet werden. Werksseitig beziehungsweise in vorgelagerten Montageschritten bereits geschlossene Gehäuse der Systemladevorrichtung müssen also nicht auseinandergebaut werden mit der Folge, dass Fehler vermieden werden und einer Manipulation der Ladevorrichtung entgegengewirkt ist.

Die Erfindung erlaubt es insbesondere, das Kommunikationsmodul der Systemladevorrichtung optional vorzusehen und insbesondere auch im Feld nachzurüsten. Sofern beispielsweise eine Systemladevorrichtung in der ersten Funktionskonfiguration an einen Kunden ausgeliefert wurde und an dieser Systemladevorrichtung nachträglich ein Kommunikationsmodul vorgesehen werden soll, kann dies in besonders einfacher Weise und bevorzugt von einem Käufer und/oder einem Betreiber der Systemladevorrichtung selbst installiert werden. Eine Fachkraft ist für die Installation des Kommunikationsmoduls nicht mehr notwendig. Die erfindungsgemäße Systemladevorrichtung weist insofern drei eigenständige Funktionsmodule auf, nämlich das stets vorgesehene Anschlussmodul, das ebenfalls stets vorgesehene Lademodul und das optionale Kommunikationsmodul. Die volle Funktionsfähigkeit der Systemladevorrichtung in Bezug auf das Laden und/oder Entladen des an die Systemladevorrichtung angeschlossenen elektrisch betreibbaren Fahrzeugs ist dabei stets gewährleistet. Hierzu bedarf es lediglich des Anschlussmoduls und des Lademoduls. Lediglich die Übertragung von Austauschdaten an den externen Serviceanbieter, insbesondere den Betreiber der Systemladevorrichtung und/oder einen Energieversorger, ist ohne das Kommunikationsmodul nicht möglich.

Im Sinne der Erfindung ist die Montagenische für das Kommunikationsmodul außen an einem Gehäuse mit der Systemladevorrichtung gebildet, wenn die wenigstens eine Gehäusewandung, nämlich die Lademodulgehäusewandung und/oder die Anschlussmodulgehäusewandung, den Gehäuseinnenraum, nämlich den Lademodulgehäuseinnenraum und/oder den Anschlussmodulgehäuseinnenraum, dem eine Lademodulgehäusewandungsinnenseite und/oder eine Anschlussmodulgehäusewandungsinnenseite zugewandt sind, von der Montagenische trennt. Der Montagenische ist insofern die Lademodulgehäusewandungsaußenseite und/oder eine Anschlussmodulgehäusewandungsaußenseite zugewandt.

Das als Komponente des Lademoduls ausgeführte Steckelement der Systemladevorrichtung kann beispielsweise räumlich zumindest abschnittsweise in das Lademodulgehäuse als Stecker mit einer Kupplung eingebaut und/oder als Steckdose ausgeführt sein. Beispielsweise könnte das Lademodul ein angeschlagenes Ladekabel mit einer Kupplung vorsehen, wobei die Kupplung als Steckelement der Verbindung der Systemladevorrichtung mit dem elektrisch betreibbaren Fahrzeug dient.

Nach einer bevorzugten Ausführungsform der Erfindung ist das Kommunikationsmodul in Abhängigkeit von einer Funktionskonfiguration der Systemladevorrichtung als optionale Funktionskomponente derselben vorgesehen, wobei in einer ersten Funktionskonfiguration der Systemladevorrichtung auf das Kommunikationsmodul verzichtet ist und die Montagenische leer bleibt und in einer zweiten Funktionskonfiguration das Kommunikationsmodul in der Montagenische montiert ist und mit dem Steuergerät zusammenwirkt derart, dass die Austauschdaten von der Systemladevorrichtung an den externen Serviceanbieter übertragbar sind und/oder zurück. Während das Anschlussmodul und das Lademodul also stets vorgesehen werden, ist das Kommunikationsmodul als optionales Funktionsmodul der Ladesystemvorrichtung nur in der zweiten Funktionskonfiguration installiert. Die erste Funktionskonfiguration eignet sich insbesondere für die Installation im privaten oder nicht öffentlichen Raum. Systemladevorrichtungen, die in der zweiten Funktionskonfiguration ausgeliefert werden, werden typischerweise im öffentlichen Raum betrieben. Das Kommunikationsmodul und die Übertragung der Austauschdaten an den externen Serviceanbieter dienen dann beispielsweise einer Abrechnung des Ladevorgangs gegenüber einem Kunden, der Fernwartung und/oder Ferndiagnose und der Zustandsüberwachung.

Nach einer Weiterbildung der Erfindung umgreifen in der zweiten Funktionskonfiguration der Systemladevorrichtung das Anschlussmodulgehäuse und das Lademodulgehäuse gemeinsam und jeweils abschnittsweise das Kommunikationsmodul. Insbesondere ist das Kommunikationsmodul in der zweiten Funktionskonfiguration zwischen dem Anschlussmodul und dem Lademodul angeordnet und in der Montagenische von außen unzugänglich vorgesehen. Vorteilhaft schützen das Anschlussmodulgehäuse und das Lademodulgehäuse hierbei das Kommunikationsmodul mit der Folge, dass es gegen Umwelteinflüsse und/oder Manipulation geschützt ist. Gemäß einer weiteren Ausgestaltung der Erfindung weist die Montagenische eine Dichtung zum Schutz vor Feuchtigkeit und anderen Umwelteinflüssen auf. Die Montagenische kann hierbei an dem Lademodulgehäuse, an dem Anschlussmodulgehäuse oder an beiden Gehäusen gebildet sein.

Beispielsweise kann das Kommunikationsmodul ein Kommunikationsmodulgehäuse vorsehen. Die Montagenische nimmt dann in der zweiten Funktionskonfiguration das Kommunikationsmodul mit dem Kommunikationsmodulgehäuse auf. Vorteilhaft verbessert sich die Robustheit durch das Vorsehen des Kommunikationsmodulgehäuses mit der Folge, dass das Kommunikationsmodul gegen Umwelteinflüsse, beispielsweise Feuchtigkeit und Schmutz, und gegen manipulative Zugriffe besonders gut geschützt ist. Darüber hinaus kann durch das Vorsehen des Kommunikationsmodulgehäuses auch die Nachrüstbarkeit des Kommunikationsmoduls insbesondere durch Nicht-Fachleute vereinfacht werden.

Beispielsweise kann das Kommunikationsmodul durch eine bestückte Platine gebildet sein, welche in der zweiten Funktionskonfiguration der Systemladevorrichtung in eine Platinenaufnahme eingesetzt ist, die das Anschlussmodul oder bevorzugt das Lademodul im Bereich der Montagenische vorsieht. Vorteilhaft reduziert sich bei dieser Ausführungsvariante der Platzbedarf mit der Folge, dass der erfinderische Gedanke auch bei kompaktbauenden Ladevorrichtungen, beispielsweise bei in Form einer Wallbox realisierten Ladevorrichtungen umgesetzt werden kann. Überdies können die Kosten durch den Verzicht auf das Kommunikationsmodulgehäuse gesenkt werden.

Nach einer Weiterbildung der Erfindung sind an dem Kommunikationsmodul einerseits und an dem Anschlussmodul oder an dem Lademodul andererseits korrespondierend gestaltete Verbindungsschnittstellensteckelemente vorgesehen. Die Verbindungsschnittstellensteckelemente sind eingerichtet zum mechanischen und elektrischen Verbinden des Kommunikationsmoduls mit dem Lademodul. Bevorzugt sind die Verbindungsschnittstellensteckelemente so ausgebildet, dass die Verbindung werkzeuglos hergestellt werden kann. Vorteilhaft vereinfacht sich die werksseitige und/oder nachträgliche Installation des Kommunikationsmoduls durch das Vorsehen der Verbindungsschnittstellensteckelemente. Insbesondere können die Verbindungsschnittstellensteckelemente als alleinige kontaktbehaftete elektrische Schnittstelle des Kommunikationsmoduls ausgebildet sein. Die mechanische Verbindung kann hierbei wahlweise ebenfalls alleine über die Verbindungsschnittstellensteckelemente oder zusätzlich über weitere mechanische Schnittstellen realisiert sein. Beispielsweise kann das Kommunikationsmodulgehäuse gegen das Lademodulgehäuse abgestützt sein.

Nach einer Weiterbildung der Erfindung ist das Anschlussmodulgehäuse als ein geschlossenes Anschlussmodulgehäuse ausgebildet. Bevorzugt bilden der Anschlussadapter des Anschlussmoduls und der Lademoduladapter des Lademoduls die einzig elektrische Kopplung von Anschlussmodul und Lademodul. Besonders bevorzugt sind die Adapter als Stecker und Gegenstecker ausgebildet, wobei sie lösbare mechanische Verbindungsmittel vorsehen zum wiederholten und insbesondere werkzeuglosen Verbinden und Trennen des Lademoduls von dem Anschlussmodul. Beispielsweise können Rastmittel als Verbindungsmittel vorgesehen sein. Vorteilhaft ergibt sich durch diese Ausführungsform die Möglichkeit, das Anschlussmodul unabhängig vom Lademodul zu installieren. Das zu dem Anschlussmodul geführte externe Anschlusskabel wird bei der Installation des Anschlussmoduls vor Ort von einer Fachkraft angeschlossen. Das Lademodul und optional das Kommunikationsmodul können dann später auch von einer Nicht-Fachkraft an das bereits ortsfest installierte Anschlussmodul der Systemladevorrichtung angebaut werden. Ihre Montage erfolgt bevorzugt werkzeuglos. Zugleich vereinfacht sich durch das lösbare Befestigen des Lademoduls an dem Anschlussmodul das Nachrüsten des Kommunikationsmoduls, wenn die Montagenische zwischen den Modulen gebildet ist.

Nach einer Weiterbildung der Erfindung ist den Montagenischen eine Verschlussklappe zugeordnet, mit der die Montagenische in der ersten Funktionskonfiguration und in der zweiten Funktionskonfiguration wahlweise freigegeben oder zumindest teilweise verschlossen werden kann. Durch das Vorsehen der Verschlussklappe ist einem Eindringen von Feuchtigkeit oder Schmutz in die Montagenische entgegengewirkt. Zugleich ist das Kommunikationsmodul, welches in der zweiten Funktionskonfiguration in der Montagenische installiert ist, durch die Verschlussklappe besonders gut geschützt.

Das Anschlussmodul kann beispielsweise als bodenstehendes Anschlussmodul oder als wandmontiertes Anschlussmodul vorgesehen sein. Beispielsweise kann das Anschlussmodul als trägermontiertes Anschlussmodul realisiert sein. Bevorzugt dienen ein Pfosten oder ein Rahmen als Träger für das trägermontierte Anschlussmodul. Das Anschlussmodulgehäuse, das Lademodulgehäuse, das Kommunikationsmodulgehäuse, der Anschlussadapter, der Lademoduladapter und/oder die Verbindungsschnittstellensteckelemente sind bevorzugt wenigstens IPXXB- beziehungsweise IPXXC- beziehungsweise IPXXD-geschützt ausgebildet.

Nach einer Weiterbildung der Erfindung ist die modulare Struktur der Systemladevorrichtung so realisiert, dass ein der Ladeleistungsleitung zugeordneter Fehlerstromschutzschalter und/oder ein Leitungsschutzschalter in dem Anschlussmodulgehäuseinnenraum vorgesehen sind, wohingegen das Steckelement an dem Lademodul gebildet ist.

Nach einer Weiterbildung der Erfindung ist die Systemladevorrichtung als eine eichrechtskonforme Ladevorrichtung ausgebildet. Alle zur eichrechtskonformen Abrechnung der Ladeleistung vorgesehenen Funktionskomponenten, insbesondere das Steckelement, ein Zähler und ein Schaltelement zum Schalten der Ladeleistungsleitung, sind in dem Lademodulinnenraum vorgesehen. Das Lademodulgehäuse ist geschlossen ausgebildet und zum Schutz vor Manipulation beziehungsweise ihrem Nachweis verplombt und/oder versiegelt.

Im Sinne der Erfindung ist die Systemladevorrichtung als geeichte Ladevorrichtung beziehungsweise eichrechtskonform ausgeführt, wenn sie nach lokalen, nationalen beziehungsweise länderübergreifenden Vorgaben zugelassen ist, um zu Abrechnungszwecken eingesetzt zu werden. Beispielsweise werden Zähler mit einer Konformitätsbescheinigung, beispielsweise MID-konforme Energiezähler als geeichte Energiezähler vorgesehen.

Optional kann vorgesehen sein, dass eine zwischen dem Lademodul und dem Kommunikationsmodul ausgebildete Datenschnittstelle als eine rückwirkungsfreie Datenschnittstellte realisiert ist.

Im Sinne der Erfindung gilt die Datenschnittstelle als rückwirkungsfrei, wenn sie den Vorgaben der PTB-A 50.7 der Physikalisch Technischen Bundesanstalt (Stand: 2002) oder gleichwertiger sonstiger lokaler, nationaler beziehungsweise länderübergreifender Standards entspricht. Hiervon umfasst ist unter anderem die elektrische Rückwirkungsfreiheit derart, dass durch Kurzschlüsse zwischen beliebigen Anschlüssen der Datenschnittstelle eichtechnisch relevante Funktionen des Lademoduls und dort gespeicherte Daten nicht beeinflusst werden. Darüber hinaus ist die Datenschnittstelle logisch rückwirkungsfrei auszubilden derart, dass die speziellen Softwareanforderungen nach dem Anhang PTB-A 50.7-1 zur vorstehend genannten Norm realisiert sind und insbesondere nur vorab definierte Zugriffe durchgeführt und/oder Daten übertragen werden können. Es ist hierbei insbesondere berücksichtigt, dass die Programmroutinen, die das Lademodul ausführt, über die Datenschnittstelle nicht in unzulässiger Weise beeinflusst werden können.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Fig. 1: eine Frontansicht eines bodenstehenden Anschlussmoduls einer konfigurierbaren Systemladevorrichtung in einer ersten Ausführungsvariante als Prinzipdarstellung,
- Fig. 2: das Anschlussmodul nach Fig. 1 in einer Seitenansicht,
- Fig. 3: eine Frontansicht eines Lademoduls der Systemladevorrichtung in der ersten Ausführungsvariante als Prinzipdarstellung,
- Fig. 4: das Lademodul nach Fig. 3 in einer Rückseitenansicht,
- Fig. 5: eine Prinzipdarstellung der ersten Ausführungsvariante der Systemladevorrichtung in einer ersten Funktionskonfiguration mit dem Anschlussmodul nach den Fig. 1 und 2 und dem Lademodul nach den Fig. 3 und 4,
- Fig. 6: einen Einbau eines Kommunikationsmoduls der Systemladevorrichtung in der ersten Ausführungsvariante in das Lademodul nach den Fig. 3 und 4 als Prinzipdarstellung,
- Fig. 7: eine vergrößerte Darstellung eines Details X nach Fig. 6,
- Fig. 8: eine Prinzipdarstellung der ersten Ausführungsvariante der Systemladevorrichtung in einer zweiten Funktionskonfiguration mit dem in das Lademodul eingesetzten Kommunikationsmodul,
- Fig. 9: eine Frontansicht eines Lademoduls der konfigurierbaren Systemladevorrichtung in einer zweiten Ausführungsvariante als Prinzipdarstellung,
- Fig. 10: eine Prinzipdarstellung der zweiten Ausführungsvariante der Systemladevorrichtung in der ersten Funktionskonfiguration mit einem wandmontierten Anschlussmodul und dem Lademodul nach Fig. 8,
- Fig. 11: eine Prinzipdarstellung der zweiten Ausführungsvariante der Systemladevorrichtung in der zweiten Funktionskonfiguration mit dem in das Lademodul eingesetzten Kommunikationsmodul,
- Fig. 12: eine Frontansicht einer dritten Ausführungsvariante der konfigurierbaren Systemladevorrichtung mit einem trägermontierten Anschlussmodul und einem Lademodul als Prinzipdarstellung,
- Fig. 13: eine Seitenansicht der dritten Ausführungsvariante der Systemladevorrichtung nach Fig. 11 in der ersten Funktionskonfiguration als Prinzipdarstellung und
- Fig. 14: eine teilweise Seitenansicht der dritten Ausführungsvariante der Systemladevorrichtung nach Fig. 11 in der zweiten Funktionskonfiguration mit dem in das Lademodul eingesetzten Kommunikationsmodul als Prinzipdarstellung.

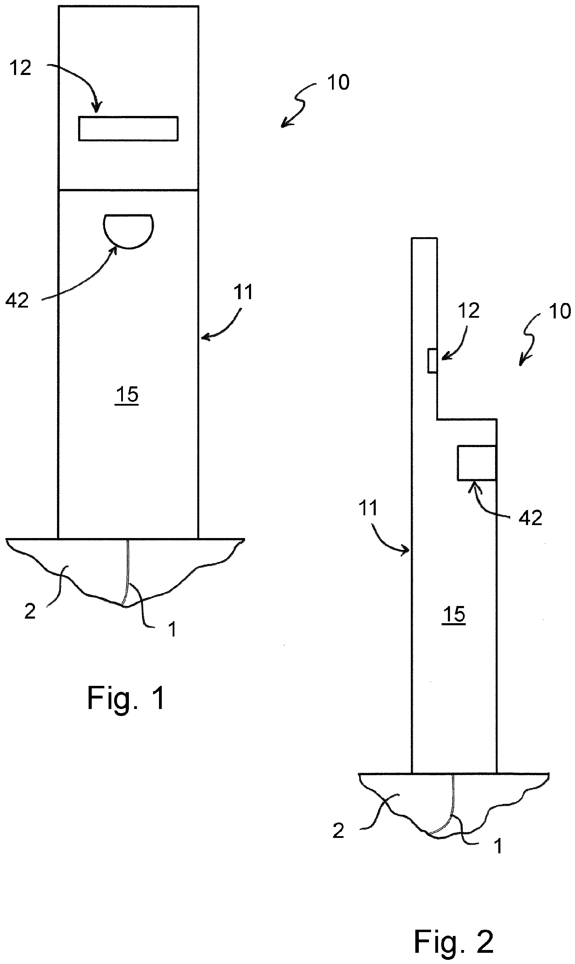

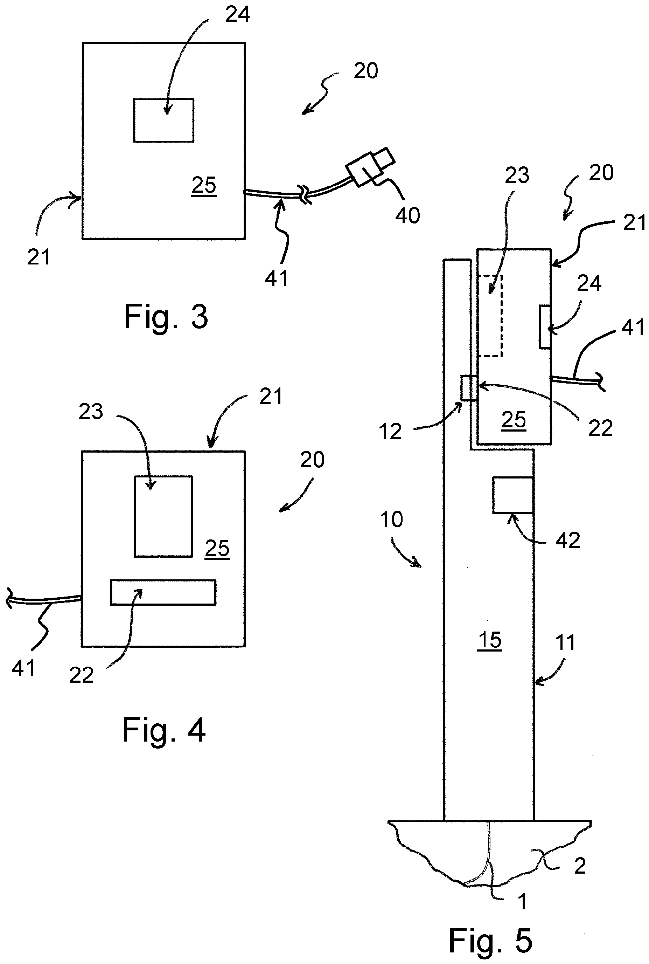

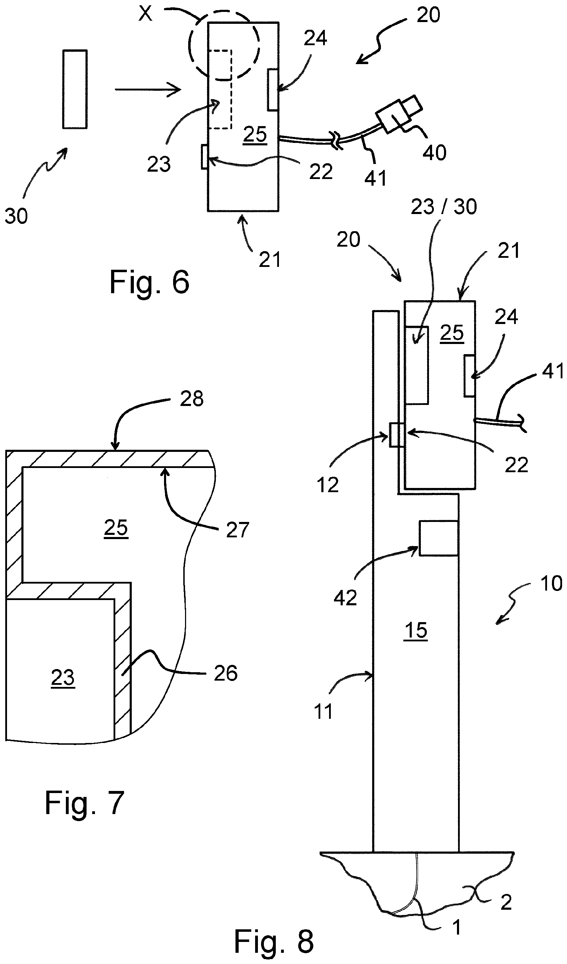

Eine erste Ausführungsvariante einer erfindungsgemäßen Systemladevorrichtung nach den Figuren 1 bis 8 sieht ein bodenstehendes Anschlussmodul 10 mit einem Anschlussmodulgehäuse 11 und ein an dem Anschlussmodul 10 montierbares Lademodul 20 mit einem Lademodulgehäuse 21 und einer Montagenische 23 sowie einem Steckelement 40 vor. Das Steckelement 40 des Lademoduls 20 ist exemplarisch nach Art einer Kupplung ausgebildet und an einem freien Ende eines angeschlagenen Ladekabels 41 des Lademoduls 20 vorgesehen. Die Montagenische 23 ist im vorliegenden Ausführungsbeispiel der Erfindung außen an dem Lademodulgehäuse 21 auf einer im montierten Zustand dem Anschlussmodulgehäuse 11 zugewandten Rückseite des Lademodulgehäuses 21 vorgesehen. Das Anschlussmodul 10 sieht eine Steckaufnahme 42 vor, die als Parkposition der Aufnahme des Steckelements 40 bei dessen Nichtverwendung dient. Die Steckaufnahme 42 ist als mechanischer Adapter nicht elektrisch kontaktiert.

In der Montagenische 23 kann in Abhängigkeit von einer Konfiguration der Systemladevorrichtung ein Kommunikationsmodul 30 installiert sein. Die Systemladevorrichtung kann demzufolge in einer ersten Funktionskonfiguration ohne das Kommunikationsmodul 30 und in einer zweiten Funktionskonfiguration mit dem Kommunikationsmodul 30 betrieben werden. In beiden Funktionskonfigurationen kann mittels der Systemladevorrichtung ein Ladevorgang durchgeführt werden. Das optionale Kommunikationsmodul 30 dient der drahtlosen und/oder leitungsgebundenen Übertragung von Austauschdaten mit einem externen Serviceanbieter. Beispielsweise werden Informationen zum Ladevorgang und/oder abrechnungsbezogene Informationen das an die Systemladevorrichtung angeschlossene elektrisch betreibbare Fahrzeug und/oder den Kunden betreffend über das Kommunikationsmodul 30 an den externen Serviceanbieter übertragen. Beispielsweise werden Vorgabewerte für den Betrieb der Ladestation, insbesondere Vorgaben für die an der Systemladevorrichtung maximal bereitgestellte Ladeleistung vom Serviceanbieter entgegengenommen. Durch die Entgegenname der Vorgabewerte kann beispielsweise sichergestellt werden, dass ein Versorgungsnetz, an dem die Systemladestation angeschlossen ist, nicht überlastet wird oder dass bedarfsgerecht Leistung aus einem Energiespeicher des an die Ladestation angeschlossenen elektrisch betreibbaren Fahrzeugs in das Versorgungsnetz zurückgespeist wird.

Das Lademodul 20 sieht vorliegend das Lademodulgehäuse 21 sowie ein Display als Anzeigeeinheit 24 und Benutzerschnittstelle vor. Das Lademodulgehäuse 21 weist eine Lademodulgehäusewandung 26 mit einer Lademodulgehäusewandungsinnenseite 27 und einer Lademodulgehäusewandungsaußenseite 28 auf. Die Lademodulgehäusewandung 26 umschließt einen Lademodulgehäuseinnenraum 25, dem die Lademodulgehäusewandungsinnenseite 27 zugewandt ist. In dem Lademodulgehäuseinnenraum 25 ist vorliegend das Display 24 sowie ein nicht separat dargestelltes Steuergerät zum Durchführen des Ladevorgangs vorgesehen.

Das Anschlussmodul 10 ist als bodenstehendes Anschlussmodul 10 realisiert. Ein externes, nicht zur erfindungsgemäßen Systemladevorrichtung gehörendes Anschlusskabel 1 wird als Erdkabel von unten durch das Erdreich beziehungsweise einen Boden 2 zu dem Anschlussmodul 10 geführt und dort über nicht dargestellte Anschlussmittel aufgenommen.

Das Anschlussmodul 10 sieht einen Anschlussadapter 12 vor, der der Verbindung des Anschlussmoduls 10 mit dem Lademodul 20 dient. In analoger Weise sieht das Lademodul 20 einen korrespondierend zu dem Anschlussadapter 12 gestalteten Lademoduladapter 22 vor.

Über die Adapter 12, 22 werden das Anschlussmodul 10 und das Lademodul 20 elektrisch und mechanisch gekoppelt. Beispielsweise erfolgt über die Adapter 12, 22 die Kommunikation des Steuergeräts mit einem nicht dargestellten Schaltelement, welches in dem Anschlussmodul 10 vorgesehen sein kann und zum Schalten einer ebenfalls nicht dargestellten, von dem Anschlusskabel 1 zu dem Steckelement 40 geführten Ladeleistungsleitung der Systemladevorrichtung dient. Beispielsweise wird ein Schaltzustand eines in dem Anschlussmodulgehäuse 11 vorgesehenen und der Ladeleistungsleitung zugeordneten Fehlerstromschutzschalters über die Adapter 12, 22 an das Steuergerät übertragen. Insofern werden über die Adapter 12, 22 beispielsweise während des Ladevorgangs Betriebsdaten der Systemladevorrichtung übertragen.

Die Montagenische 23, die der Aufnahme des optionalen Kommunikationsmoduls 30 dient, ist auf einer Rückseite des Lademodulgehäuses 21 benachbart zu dem Lademoduladapter 22 vorgesehen. In einem montierten Zustand von Anschlussmodul 10 und Lademodul 20 ist die Montagenische zwischen den Gehäusen 11, 21 so vorgesehen, dass sie von außen unzugänglich ist. Das optional in der Montagenische 23 vorgesehene Kommunikationsmodul 30 ist insofern geschützt zwischen dem Anschlussmodul 10 beziehungsweise seinem Anschlussmodulgehäuse 11 und dem Lademodul 20 beziehungsweise seinem Lademodulgehäuse 21 angeordnet.

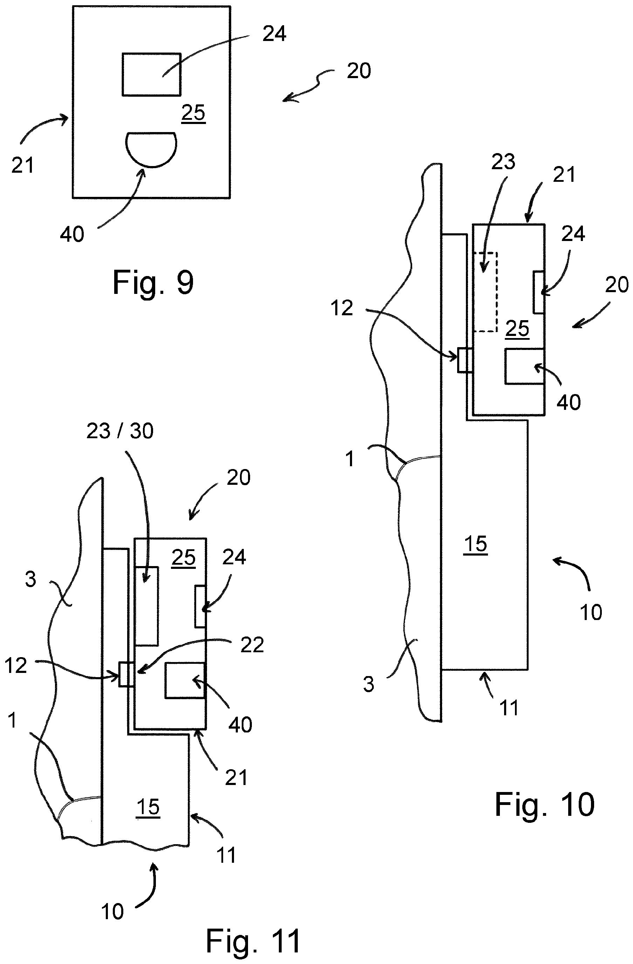

Die Figuren 9 bis 11 zeigen eine zweite Ausführungsvariante der Systemladevorrichtung. Nach der zweiten Ausführungsvariante ist die Systemladevorrichtung als Wallbox realisiert. Das Anschlussmodul 10 ist mit seinem Gehäuse 11 an einer Wand 3 installiert. Das Anschlusskabel 1 ist über die Wand 3 zu dem Anschlussmodul 10 mit den nicht dargestellten Anschlussmitteln geführt.

An das Anschlussmodul 10 ist das Lademodul 20 angebaut. Zum Verbinden von Anschlussmodul 10 und Lademodul 20 dienen in bekannter Weise der Anschlussadapter 12 und der Lademoduladapter 22. Ebenfalls in bekannter Weise ist an dem Lademodulgehäuse 21 außen die Montagenische 23 für das optional vorgesehene Kommunikationsmodul 30 gebildet. Im montierten Zustand von Anschlussmodul 10 und Lademodul 20 sind die Montagenische 23 und optional das Kommunikationsmodul 30 von außen unzugänglich zwischen dem Anschlussmodul 10 und dem Lademodul 20 angeordnet.

Nach dem zweiten Ausführungsbeispiel der Erfindung ist das Steckelement 40 dem Lademodul 20 zugeordnet. Die Systemladevorrichtung ist insofern insgesamt exemplarisch als eine geeichte Systemladevorrichtung ausgebildet. Hierbei sind alle eichrechtsrelevanten Funktionskomponenten der Systemladevorrichtung, insbesondere das Steckelement 40, ein Zähler sowie Schaltmittel zum Schalten der Ladeleistungsleitung in dem Modulgehäuseinnenraum 25 des Lademoduls 20 installiert. Das Lademodulgehäuse 21 ist als ein geschlossenes Lademodulgehäuse 21 ausgebildet, sodass die in dem Lademodulgehäuseinnenraum 25 vorgesehenen Funktionskomponenten manipulationsgeschützt angeordnet sind. Das Lademodulgehäuse 21 ist zur Vermeidung von Manipulation beziehungsweise zur Kenntlichmachung eines nicht autorisierten Zugriffs verplombt.

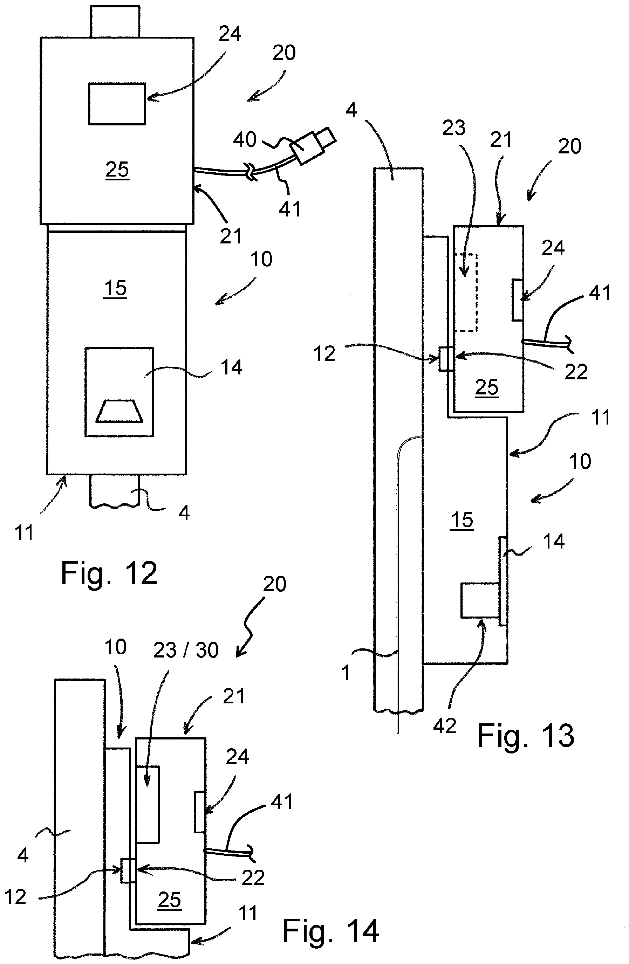

In einer dritten erfindungsgemäßen Ausführungsvariante der Erfindung nach den Figuren 12 bis 14 ist die Systemladevorrichtung an einem als Träger dienenden Pfosten 4 installiert. Das Lademodul 20 sieht in bekannter Weise das angeschlagene Ladekabel 41 und endseitig hieran die Kupplung als Steckelement 40 vor. Das Anschlussmodul 10 mit dem Anschlussmodulgehäuse 11 sieht die Steckaufnahme 42 als Parkposition für das Steckelement 40 vor. Der Steckaufnahme 42 ist ein Schiebedeckel 14 zugeordnet zum wahlweisen Überdecken beziehungsweise Freigeben der Steckaufnahme 42.

Das Anschlusskabel 1 ist über den Pfosten 4 in das Anschlussmodulgehäuse 11 des Anschlussmoduls 10 geführt. Das an dem Anschlussmodul 10 gehaltene Lademodul 20 ist in bekannter Weise über die Adapter 12, 22 mit dem Anschlussmodul 10 elektrisch und mechanisch verbunden. In der rückseitig an dem Lademodul 20 gebildeten Montagenische 23 kann optional das der Übertragung von Austauschdaten dienende Kommunikationsmodul 30 vorgesehen sein.

Als elektrisch betreibbare Fahrzeuge im Sinne der Erfindung gelten insbesondere alle Automobile (PKW, LKW, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die Systemladevorrichtung kann verwendet werden zum Bereitstellen von elektrischer Energie für Fahrzeuge mit und ohne eigenen Energiespeicher.

Eine Systemladevorrichtung im Sinne der Erfindung dient der Bereitstellung elektrischer Energie für elektrisch betreibbare Fahrzeuge im öffentlichen oder privaten Bereich. Darüber hinaus kann vorgesehen sein, dass die Systemladevorrichtung genutzt wird, um im Rahmen eines übergeordneten Energie- und/oder Lastmanagements Energie aus einem Energiespeicher des an die Systemladevorrichtung angeschlossenen elektrisch betreibbaren Fahrzeug in das Versorgungsnetz ein- beziehungsweise zurückzuspeisen. Auf diese Weise können Spitzenbedarfe abgedeckt und das Versorgungsnetz stabilisiert werden.

Gleiche Bauteile und Bauteilfunktionen sind durch gleiche Bezugszeichen gekennzeichnet.

## Patentansprüche

1. Systemladevorrichtung für elektrisch betreibbare Fahrzeuge umfassend ein Anschlussmodul (10) mit einem Anschlussmodulgehäuse (11) und Anschlussmitteln für ein zu dem Anschlussmodul (10) geführtes externes Anschlusskabel (1), wobei das Anschlussmodulgehäuse (11) eine Anschlussmodulgehäusewandung mit einer Anschlussmodulgehäusewandungsinnenseite und einer Anschlussmodulgehäusewandungsaußenseite vorsieht und die Anschlussmodulgehäusewandung einen Anschlussmodulgehäuseinnenraum (15) umschließt, dem die Anschlussmodulgehäusewandungsinnenseite zugewandt ist, umfassend ein an das Anschlussmodul (10) angebautes Lademodul (20) mit einem Lademodulgehäuse (21), wobei das Lademodulgehäuse (21) eine Lademodulgehäusewandung (26) mit einer Lademodulgehäusewandungsinnenseite (27) und einer Lademodulgehäusewandungsaußenseite (28) vorsieht und die Lademodulgehäusewandung (26) einen Lademodulgehäuseinnenraum (25) umschließt, dem die Lademodulgehäusewandungsinnenseite (27) zugewandt ist, mit einem Steckelement (40), wobei das Steckelement (40) eingerichtet ist zum Übertragen einer Ladeleistung und zum Austausch von Ladevorgangssignalen mit einem elektrisch betreibbaren Fahrzeug, und mit einem in dem Lademodulgehäuseinnenraum (25) vorgesehenen Steuergerät, welches eingerichtet ist zum Durchführen des Ladevorgangs, und umfassend eine Ladeleistungsleitung, welche von den Anschlussmitteln des Anschlussmoduls (10) zu dem Steckelement (40) geführt ist, wobei das Anschlussmodul (10) einen Anschlussadapter (12) und das Lademodul (20) einen korrespondierend gestalteten Lademoduladapter (22) vorsieht zur elektrischen und mechanischen Kopplung von Anschlussmodul (10) und Lademodul (20) derart, dass über die miteinander verbundenen Adapter (12, 22) die Ladeleistung und/oder Betriebsdaten übertragbar sind, **dadurch gekennzeichnet, dass** außen an dem Anschlussmodulgehäuse (11) und/oder außen an dem Lademodulgehäuse (21) eine abschnittsweise von der Anschlussmodulgehäusewandungsaußenseite und/oder der Lademodulgehäusewandungsaußenseite (28) begrenzte Montagenische (23) für ein Kommunikationsmodul (30) gebildet ist.

2. Systemladevorrichtung nach Anspruch 1, **dadurch gekennzeichnet, dass** das Kommunikationsmodul (30) eingerichtet ist für die drahtlose und/oder leitungsgebundene Übertragung von Austauschdaten an einen externen Serviceanbieter und/oder zurück und/oder dass das Kommunikationsmodul (30) in Abhängigkeit von einer Funktionskonfiguration der Systemladevorrichtung als Funktionskomponente derselben vorgesehen ist und wobei
- in einer ersten Funktionskonfiguration auf das Kommunikationsmodul (30) verzichtet ist und
- in einer zweiten Funktionskonfiguration das Kommunikationsmodul (30) in der Montagenische (23) montiert ist und mit dem Steuergerät zusammenwirkt derart, dass die Austauschdaten von der Systemladevorrichtung an den externen Serviceanbieter übertragbar sind.

3. Systemladevorrichtung nach Anspruch 2, **dadurch gekennzeichnet, dass** in der zweiten Funktionskonfiguration das Anschlussmodulgehäuse (11) und das Lademodulgehäuse (21) gemeinsam und jeweils abschnittsweise das Kommunikationsmodul (30) umgreifen.

4. Systemladevorrichtung nach Anspruch 2 oder 3, **dadurch gekennzeichnet, dass** in der zweiten Funktionskonfiguration das Kommunikationsmodul (30) zwischen dem Anschlussmodul (10) und dem Lademodul (20) angeordnet ist und/oder dass die Montagenische (23) mit dem optional darin vorgesehenen Kommunikationsmodul (30) im montierten Zustand von Anschlussmodul (10) und Lademodul (20) nicht zugänglich ist.

5. Systemladevorrichtung nach einem der Ansprüche 1 bis 4, **dadurch gekennzeichnet, dass** die Montagenische (23) außen an dem Lademodulgehäuse (21) gebildet ist und/oder dass die Montagenische (23) und der Lademodulgehäuseinnenraum (25) auf einander gegenüberliegenden Seiten der Lademodulgehäusewandung (26) vorgesehen sind und/oder dass die Lademodulgehäusewandung (26) die Montagenische (23) von dem Lademodulgehäuseinnenraum (25) abtrennt.

6. Systemladevorrichtung nach einem der Ansprüche 2 bis 5, **dadurch gekennzeichnet, dass** das Kommunikationsmodul (30) ein Kommunikationsmodulgehäuse vorsieht.

7. Systemladevorrichtung nach einem der Ansprüche 2 bis 6, **dadurch gekennzeichnet, dass** das Kommunikationsmodul (30) durch eine bestückte Platine gebildet ist, wobei die bestückte Platine in der zweiten Funktionskonfiguration in eine Platinenaufnahme eingesetzt ist, die im Bereich der Montagenische (23) an dem Anschlussmodul (10) und/oder dem Lademodul (20) gebildet ist.

8. Systemladevorrichtung nach einem der Ansprüche 1 bis 7, **dadurch gekennzeichnet, dass** das Kommunikationsmodul (30) und das Lademodul (20) korrespondierend gestaltete Verbindungsschnittstellensteckelemente vorsehen, wobei die Verbindungsschnittstellensteckelemente eingerichtet sind zum bevorzugt werkzeuglosen mechanischen und elektrischen Verbinden des Kommunikationsmoduls (30) mit dem Lademodul (20).

9. Systemladevorrichtung nach einem der Ansprüche 1 bis 8, **dadurch gekennzeichnet, dass** die an dem Anschlussmodul (10) und dem Lademodul (20) vorgesehenen Adapter (12, 22) als Stecker und Gegenstecker ausgebildet sind und lösbare mechanische Verbindungsmittel vorgesehen sind zum wiederholten und bevorzugt werkzeuglosen Verbinden und Trennen des Lademoduls (20) von dem Anschlussmodul (10), wobei bevorzugt Rastmittel als Verbindungsmittel vorgesehen sind.

10. Systemladevorrichtung nach einem der Ansprüche 2 bis 9, **dadurch gekennzeichnet, dass** der Montagenische (23) eine Verschlussklappe zugeordnet ist zum wahlweisen Freigeben oder Verschließen der Montagenische (23) in der ersten Funktionskonfiguration und in der zweiten Funktionskonfiguration.

11. Systemladevorrichtung nach einem der Ansprüche 1 bis 10, **dadurch gekennzeichnet, dass** das Anschlussmodul (10) als ein bodenstehendes Anschlussmodul (10) oder als ein wandmontiertes Anschlussmodul (10) oder als ein trägermontiertes Anschlussmodul (10) realisiert ist, wobei bevorzugt ein Pfosten (4) oder Rahmen als ein Träger für das trägermontierte Anschlussmodul (10) vorgesehen ist.

12. Systemladevorrichtung nach einem der Ansprüche 1 bis 11, **dadurch gekennzeichnet, dass** das Anschlussmodulgehäuse (11) und/oder das Lademodulgehäuse (21) und/oder das Kommunikationsmodulgehäuse und/oder der Anschlussadapter (12) und/oder der Lademoduladapter (22) und/oder die Verbindungsschnittstellensteckelemente zum Verbinden des Kommunikationsmoduls (30) und des Lademoduls (20) wenigstens eine IPXXB- oder IPXXC- oder IPXXD-Schutzklasse aufweisen und bevorzugt in der Schutzklasse IP44 oder besser geschützt sind.

13. Systemladevorrichtung nach einem der Ansprüche 1 bis 12, **dadurch gekennzeichnet, dass** ein der Ladeleistungsleitung zugeordneter Fehlerstromschutzschalter und/oder ein Leitungsschutzschalter in dem Anschlussmodulgehäuseinnenraum (15) vorgesehen sind.

14. Systemladevorrichtung nach einem der Ansprüche 1 bis 13, **dadurch gekennzeichnet, dass** zur eichrechtskonformen Abrechnung einer Ladeenergie das Steckelement (40) und ein Zähler sowie bevorzugt des Weiteren ein Schaltelement zum Schalten der Ladeleistungsleitung in dem Lademodulgehäuseinnenraum (25) vorgesehen sind und darüber hinaus das Lademodulgehäuse (21) geschlossen ausgebildet ist derart, dass das Lademodulgehäuse (21) zur Realisierung eines Manipulationsschutzes und/oder zum Nachweis einer Manipulation versiegelt ist, und/oder dass eine Datenschnittstelle zwischen dem Lademodul (20) und dem Kommunikationsmodul (30) als eine rückwirkungsfreie Datenschnittstelle ausgebildet ist.
